# EUROPÄISCHE PATENTANMELDUNG

(11) **EP 2 181 876 A2**
(43) Veröffentlichungstag der Anmeldung: **05.05.2010**
(21) Anmeldenummer: 09450194.7
(22) Anmeldetag: 13.10.2009
(51) Int. Cl.: B60K 15/03

(54) **Bodenelement für einen Fahrzeugtank**

(30) Priorität: 28.10.2008 AT 6132008 U
(71) Anmelder: Alutech Gesellschaft m.b.H., 5651 Lend (AT)
(72) Erfinder: Tevini, Gerhard, 5700 Zell am See (AT); Fletcher, Paul, 5620 Schwarzach (AT); Van Klaveren, Gerrit, 2221 WE Katwijk ZH (NL)
(74) Vertreter: Weiser, Andreas

(57) **Zusammenfassung**

Bodenelement (1) aus geformtem Metallblech für einen Fahrzeugtank mit stufenförmig variierender Bodentiefe, wobei das Bodenelement (1) aus einer ersten Wanne (3) und zumindest einer zweiten Wanne (4) zusammengesetzt ist, die erste Wanne (3) einen flachen Boden (5) und zumindest einen darin eingetieften seichten Dom (6) aufweist und die zweite Wanne (4) mit einem auf den Dom (6) komplementär aufsteckbaren Umfangsrand (7) ausgestattet ist, wobei der Übergang vom Boden (5) der ersten Wanne (3, 3') in den Dom (6, 6') abgerundet und der Umfangsrand (7) der zweiten Wanne (4, 4') dementsprechend komplementär umgebogen ist.

## Beschreibung

Die vorliegende Erfindung betrifft ein Bodenelement aus geformtem Metallblech für einen Fahrzeugtank mit stufenförmig variierender Bodentiefe sowie einen Fahrzeugtank mit einem solchen Bodenelement.

Bislang wurden Bodenelemente für Fahrzeugtanks stets einteilig durch Tiefziehen gefertigt. Aufgrund stetig steigender Anforderungen der Fahrzeugindustrie nach maximaler Bauraumausnützung müssen Bodenelemente für Fahrzeugtanks zunehmend komplexere Formen annehmen, was an die Grenzen der bekannten Tiefziehtechniken stößt. Die Erfindung setzt sich zum Ziel, komplexe Bodenelemente mit stufenförmig variierender Bodentiefe von beliebiger Geometrie zu schaffen, die auf besonders einfache und kostengünstige Art und Weise gefertigt werden können.

Dieses Ziel wird erfindungsgemäß dadurch erreicht, daß das Bodenelement aus einer ersten Wanne und zumindest einer zweiten Wanne zusammengesetzt ist, wobei die erste Wanne einen flachen Boden und zumindest einen darin eingetieften seichten Dom aufweist und die zweite Wanne mit einem auf den Dom komplementär aufsteckbaren Umfangsrand ausgestattet ist, und wobei der Übergang vom Boden der ersten Wanne in den Dom abgerundet und der Umfangsrand der zweiten Wanne dementsprechend komplementär umgebogen ist.

Auf diese Weise wird ein neuartiges Stecksystem zur Herstellung komplex geformter Bodenelemente geschaffen, welches auf einfache Weise eine beliebige Abstufung der Bodentiefe, auch in unterschiedlichen Bereichen und auch mehrfach abgestuft, ermöglicht. Die komplementär abgerundeten Bodenübergänge ermöglichen dabei eine Abstützung und Selbst-Positionierung der Teile beim Schweißvorgang.

Die Konstruktion der Erfindung eignet sich besonders für eine Schweißfertigung, bei welcher der umgebogene Teil des Umfangsrandes der zweiten Wanne mit dem Boden der ersten Wanne verschweißt ist, wodurch der Umfangsrand die Schweißgeometrie festlegt.

Gemäß einer weiteren bevorzugten Ausführungsform der Erfindung hat der Dom die Form eines allgemeinen Kegelstumpfes. Dadurch ergibt sich eine Selbst-Zentrierung der zweiten Wanne beim Aufstecken auf den Dom der ersten Wanne, was eine hochpräzise, auch automatisierte Schweißung ermöglicht.

Das Bodenelement der Erfindung eignet sich darüber hinaus auch zum Aufbau von Mehrkammertanks, wenn der von der zweiten Wanne und dem Boden der ersten Wanne umschlossene Raum als eigene Kammer des Tanks verwendet wird. Alternativ kann der bzw. jeder Dom der ersten Wanne mit mehreren verteilten kleindurchmeßrigen Durchbrechungen versehen werden, wodurch der durchbrochene Boden der ersten Wanne eine Schwallwand gegenüber dem von der zweiten Wanne umgrenzten Raum des Fahrzeugtanks bildet. Schließlich kann der bzw. jeder Dom auch nur mit einer einzigen zentralen großdurchmeßrigen Durchbrechung versehen werden, was einen Fahrzeugtank mit einer einzigen Kammer ergibt.

In jedem Fall ist es besonders günstig, wenn gemäß einem weiteren Merkmal der Erfindung die erste und die zweite Wanne Tiefziehteile und bevorzugt aus Aluminiumblech gefertigt sind. Die Teile lassen sich so kostengünstig und leichtgewichtig herstellen, und ihre Kombination ergibt beliebige Bodengeometrien.

In einem weiteren Aspekt schafft die Erfindung auch einen Fahrzeugtank, der sich durch ein Bodenelement der hier vorgestellten Art auszeichnet.

Die Erfindung wird nachstehend anhand eines in den beigeschlossenen Zeichnungen dargestellten Ausführungsbeispieles näher erläutert. In den Zeichnungen zeigen:
die Fig. 1 und 2 eine erste Ausführungsform des Bodenelements der Erfindung im Schnitt und in einer perspektivischen Untersicht;
die Fig. 3 und 4 eine zweite Ausführungsform des Bodenelements der Erfindung im Schnitt und in einer perspektivischen Untersicht; und
die Fig. 5 und 6 eine dritte Ausführungsform des Bodenelements der Erfindung im Schnitt und in einer perspektivischen Untersicht.

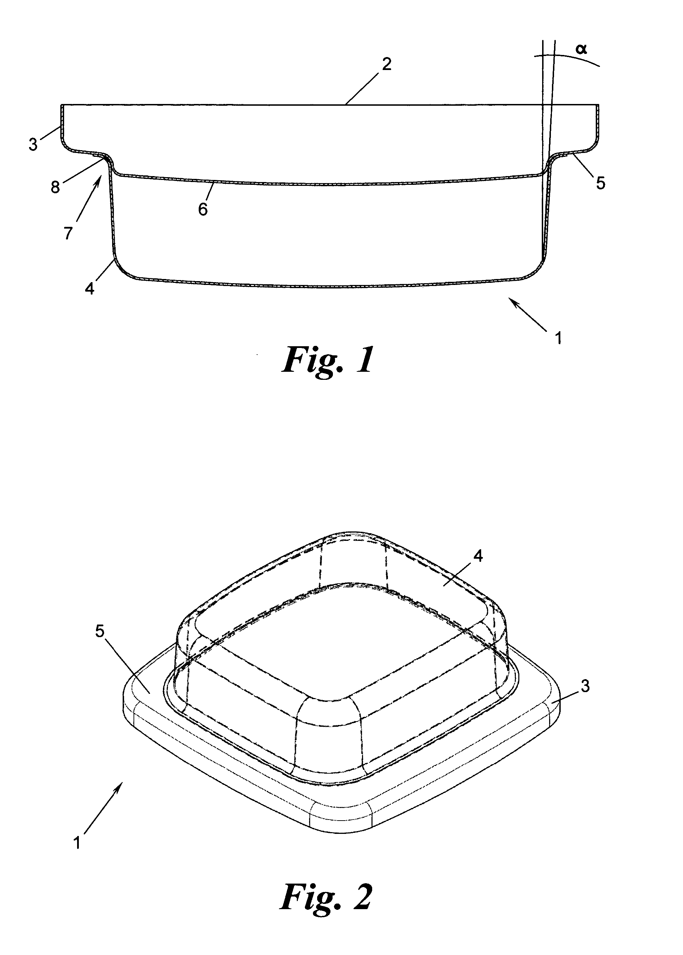

In den Fig. 1 und 2 ist ein Bodenelement 1 gezeigt, das auf seiner Oberseite 2 mit einem (hier nicht dargestellten) Deckelement verschlossen wird, um einen Fahrzeugtank zu bilden, z.B. einen Kraftstofftank. Das Bodenelement 1 setzt sich aus einer ersten Wanne 3 und einer zweiten Wanne 4 zusammen. Die erste Wanne 3 hat einen flachen Boden 5 und einen darin eingetieften, seichten Dom 6, der etwa die Form eines allgemeinen Kegelstumpfes hat. Der Übergang vom Boden 5 in den Dom 6 ist abgerundet, wie aus dem von Schnitt Fig. 1 ersichtlich ist.

Unter einem "allgemeinen Kegelstumpf" wird hier der Stumpf eines Kegels mit einer beliebigen, auch unregelmäßigen Grundfläche verstanden, wie in dem Beispiel durch die Umfangskontur des Doms 6 und der darauf aufsitzenden zweiten Wanne 4 in Fig. 2 veranschaulicht ist.

Die zweite Wanne 4 ist mit einem auf den Dom 6 komplementär aufsteckbaren Umfangsrand 7 ausgestattet. Der Umfangsrand 7 besitzt somit ebenfalls die Form eines allgemeinen Kegelstumpfes, und der Kegelmantelwinkel α sowohl des Doms 6 als auch des Umfangsrands 7 beträgt bevorzugt 0 bis 45°, besonders bevorzugt 0 bis 5°, und insbesondere bevorzugt etwa 3°.

Darüber hinaus läuft der Umfangsrand 7 an seinem Ende in einen umgebogenen Teil 8 aus, welcher komplementär auf den abgerundeten Übergang vom Boden 5 zum Dom 6 paßt, sodaß der umgebogene Teil 8 der zweiten Wanne 4 gleichzeitig einen Stütz- bzw. Schweißflansch zur Anlage auf dem Boden 5 der ersten Wanne 3 bildet.

Durch die kegelstumpfförmige Ausbildung des Umfangrandes 7 und des Doms 6 ergibt sich eine selbstzentrierende Passung zwischen der zweiten Wanne 4 und der ersten Wanne 3 beim Aufstekken der zweiten Wanne 4 auf den Dom 6. Der Umfangsrand 7 wird anschließend mit der zweiten Wanne 3 verschweißt, und zwar bevorzugt an seinem umgebogenen Teil 8.

Der Dom 6 kann mit einer einzigen zentralen großdurchmeßrigen Durchbrechung 9 versehen sein, sodaß der Zusammenbau von erster Wanne 3 und zweiter Wanne 4 einen Bodenteil 1 für einen Einkammertank bildet. Wenn der Dom 6 mit mehreren verteilten Durchbrechungen 9 versehen wird, bildet er eine Schwallwand in einem solchen Einkammertank. Alternativ kann der Dom 6 auch ohne jede Durchbrechung ausgebildet sein, sodaß die zweite Wanne 4 nach dem Verbinden der ersten Wanne 3 eine eigene Kammer in einem Mehrkammertank bildet.

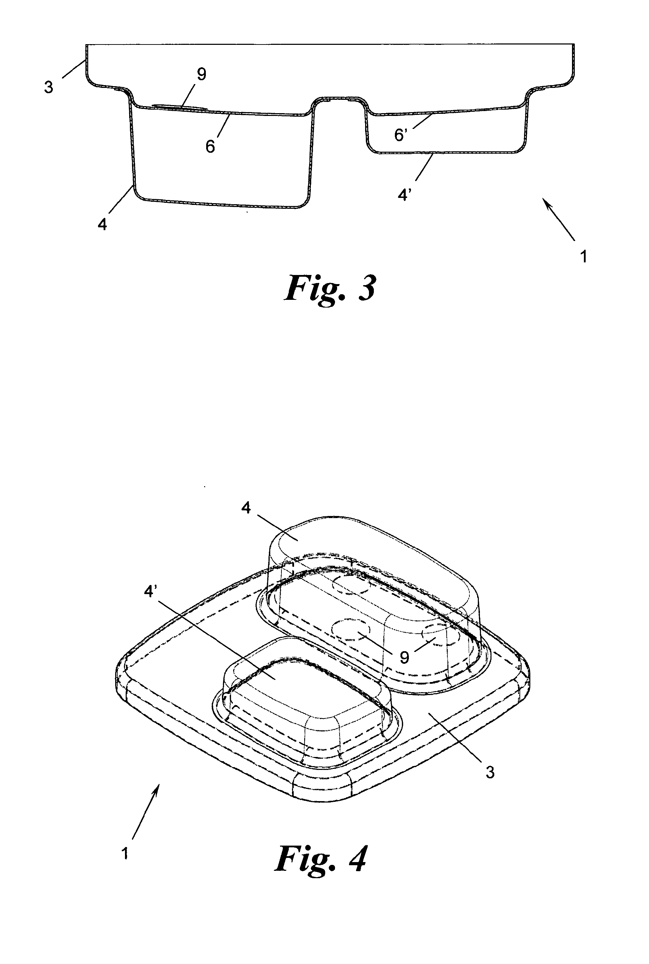

Wie in den Fig. 3 und 4 gezeigt, kann die erste Wanne 3 mit mehr als einem Dom 6, 6' und entsprechend mehreren auf diese aufgesetzten zweiten Wannen 4, 4' versehen sein, wobei die zweiten Wannen 4, 4' auch unterschiedliche Bodentiefen haben können, um ein Bodenelement 1 mit stufenförmiger variierender Bodentiefe zu erzeugen.

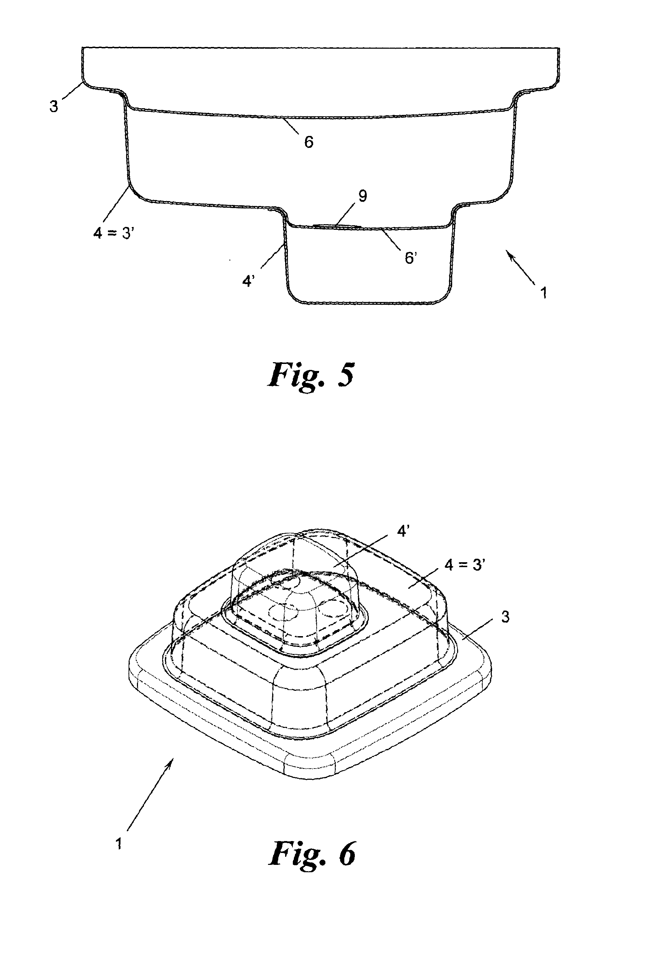

Schließlich ist es auch möglich, das hier vorgestellte Fügekonzept zu kaskadieren: Wie in den Fig. 5 und 6 dargestellt, kann jede als zweite Wanne bezeichnete Wanne 4 neuerlich als "erste Wanne" 3' betrachtet und mit eigenen Domen 6' ausgestattet werden, auf die wiederum "zweite" Wannen 4' aufgesteckt werden usw., sodaß auf diese Weise Mehrkammertanks oder Tanks mit mehrfach stufenförmig abgesetzten Bodentiefen erzeugt werden können.

Die Wannen 3, 3', 4, 4' sind bevorzugt Tiefziehteile, insbesondere aus Aluminiumblech, und werden bevorzugt durch Umfangsnahtschweißen entlang des Umfangsrandes 7 bzw. dessen umgebogenen Teiles 8 miteinander verschweißt; alternativ könnten sie auch miteinander verklebt, punktgeschweißt, reibungsverschweißt, getoxt, verclincht oder vernietet werden.

Die Erfindung ist nicht auf die dargestellten Ausführungsformen beschränkt, sondern umfaßt alle Varianten und Modifikationen, die in den Rahmen der angeschlossenen Ansprüche fallen.

## Patentansprüche

1. Bodenelement (1) aus geformtem Metallblech für einen Fahrzeugtank mit stufenförmig variierender Bodentiefe, **dadurch gekennzeichnet, daß** das Bodenelement (1) aus einer ersten Wanne (3, 3') und zumindest einer zweiten Wanne (4, 4') zusammengesetzt ist, wobei die erste Wanne (3, 3') einen flachen Boden (5) und zumindest einen darin eingetieften seichten Dom (6, 6') aufweist und die zweite Wanne (4, 4') mit einem auf den Dom (6, 6') komplementär aufsteckbaren Umfangsrand (7) ausgestattet ist, und wobei der Übergang vom Boden (5) der ersten Wanne (3, 3') in den Dom (6, 6') abgerundet und der Umfangsrand (7) der zweiten Wanne (4, 4') dementsprechend komplementär umgebogen ist.

2. Bodenelement nach Anspruch 1, **dadurch gekennzeichnet, daß** der umgebogene Teil (8) des Umfangsrandes (7) der zweiten Wanne (4, 4') mit dem Boden (5) der ersten Wanne (3, 3') verschweißt ist.

3. Bodenelement nach Anspruch 1 oder 2, **dadurch gekennzeichnet**, der Dom (6, 6') die Form eines allgemeinen Kegelstumpfes hat.

4. Bodenelement nach einem der Ansprüche 1 bis 3, **dadurch gekennzeichnet, daß** der Dom (6, 6') mit mehreren verteilten kleindurchmeßrigen Durchbrechungen (9) versehen ist.

5. Bodenelement nach einem der Ansprüche 1 bis 3, **dadurch gekennzeichnet, daß** der Dom (6, 6') mit einer zentralen großdurchmeßrigen Durchbrechungen versehen ist.

6. Bodenelement nach einem der Ansprüche 1 bis 5, **dadurch gekennzeichnet, daß** die erste und die zweite Wanne (3, 3', 4, 4') Tiefziehteile sind.

7. Bodenelement nach einem der Ansprüche 1 bis 6, **dadurch gekennzeichnet, daß** die erste und die zweite Wanne (3, 3', 4, 4') aus Aluminiumblech gefertigt sind.

8. Fahrzeugtank, **gekennzeichnet durch** ein Bodenelement nach einem der Ansprüche 1 bis 7.
